# EUROPEAN PATENT APPLICATION

(11) **EP 4 836 055 A1**
(43) Date of publication of application: **04.11.2026**
(21) Application number: 24913020.4
(22) Date of filing: 26.12.2024
(51) Int. Cl.: H01M 10/056, H01G 11/52, H01M 4/13, H01M 4/62, H01M 10/052, H01M 50/411, H01M 50/434, H01M 50/443, H01M 50/446, H01M 50/449

(54) **MIXTURE, SHEET, ELECTRODE, SEPARATOR, AND POWER STORAGE DEVICE**

(30) Priority: 28.12.2023 JP 2023223064
(71) Applicant: Niterra Co., Ltd., Nagoya-shi, Aichi 461-0005 (JP)
(72) Inventor: WATANABE, Yuu, Nagoya-shi, Aichi 461-0005 (JP); TAKEUCHI, Yuki, Nagoya-shi, Aichi 461-0005 (JP)
(74) Representative: Zimmermann & Partner Patentanwälte mbB
(86) International application number: PCT/JP2024/046192
(87) International publication number: WO 2025/143134

(57) **Abstract**

To provide a mixture (10), a sheet (12), an electrode (16), a separator (15), and a power storage device (11) that can achieve enhanced diffusion of a substance at the interface between inorganic particles (19) and an electrolytic solution (22). The electrolytic solution contains a first compound represented by chemical formula (1), a second compound represented by chemical formula (2) or (3), and an electrolyte salt dissolved in the first and second compounds. In the chemical formulas (1), (2), and (3), R₂ and R₃ are different from each other, and each of R₁, R₂, and R₃ independently represents a C≤4 alkyl group, alkoxyl group, alkenyl group, alkynyl group, or halogenated alkyl group, or the alkyl group, alkoxyl group, alkenyl group, alkynyl group, or halogenated alkyl group are bound together to form a ring structure. A mole fraction of the amount of the second compound with respect to the total amount of the first compound and the second compound is more than 0.2 and less than 0.5.

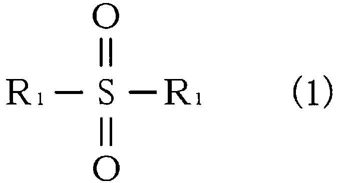

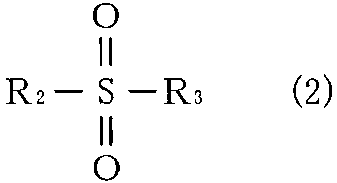

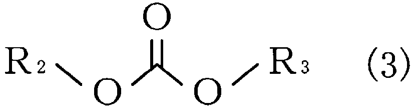

## Description

### TECHNICAL FIELD

The present invention relates to a mixture containing inorganic particles and an electrolytic solution, to a sheet, to an electrode, to a separator, and to a power storage device.

### BACKGROUND ART

Regarding a mixture containing inorganic particles and an electrolytic solution, Patent Literature 1 discloses, as a related technique, an electrolytic solution containing sulfolane and 1,2-butylene carbonate.

### CITATION LIST

### PATENT LITERATURE

Patent Literature 1: JP2021-89875A

### SUMMARY OF INVENTION

### TECHNICAL PROBLEM

In order to enhance ion conductivity of a mixture containing inorganic particles and an electrolytic solution, diffusion of a substance at the interface between inorganic particles and the electrolytic solution must be enhanced. The related technique leaves room for improvement in enhancing the diffusion.

The present invention has been conceived to solve the above problem. Thus, an object of the invention is to provide a mixture that can achieve enhanced diffusion of a substance at the interface. Another object is to provide a sheet, an electrode, a separator, and a power storage device, each containing the mixture.

### SOLUTION TO PROBLEM

In a first aspect to attain the above objects, there is provided a mixture containing inorganic particles and an electrolytic solution. The electrolytic solution contains a first compound represented by chemical formula (1), a second compound represented by chemical formula (2) or (3), and an electrolyte salt dissolved in the first and second compounds. In the chemical formulas (1), (2), and (3), R₂ and R₃ are different from each other, and each of R₁, R₂, and R₃ independently represents a C≤4 alkyl group, alkoxyl group, alkenyl group, alkynyl group, or halogenated alkyl group, or the alkyl group, alkoxyl group, alkenyl group, alkynyl group, or halogenated alkyl group are bound together to form a ring structure. A mole fraction of the amount of the second compound with respect to the total amount of the first compound and the second compound is more than 0.2 and less than 0.5.

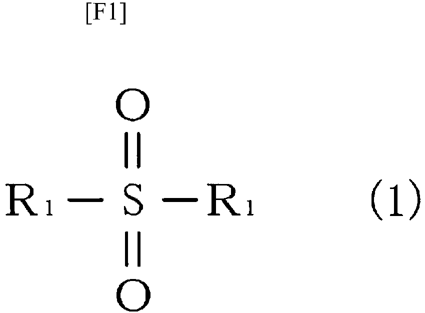

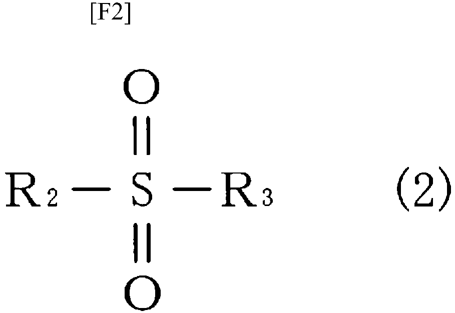

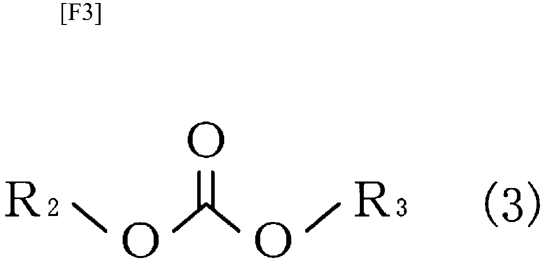

In a second aspect, the first compound of the first aspect is sulfolane.

In a third aspect, the second compound of the first or second aspect is 3-methylsulfolane or propylene carbonate.

In a fourth aspect, the electrolyte salt of any of the first to third aspects is a lithium salt.

In a fifth aspect, the inorganic particles of any of the first to fourth aspects serve as an oxide-based solid electrolyte.

In a sixth aspect, the mixture of any of the first to fifth aspects has no glass transition temperature within a range of 25°C to -100°C, as observed through differential scanning calorimetry.

In a seventh aspect, the mixture of any of the first to sixth aspects has a peak top temperature attributed to an endothermic peak as observed within a temperature elevation range from -100°C to -20°C in differential scanning calorimetry.

An eighth aspect is a sheet containing a mixture as recited in any of the first to seventh aspects.

A ninth aspect is an electrode containing a mixture as recited in any of the first to seventh aspects, or being in contact with a protective layer containing a mixture as recited in any of the first to seventh aspects.

A tenth aspect is a separator containing a mixture as recited in any of the first to seventh aspects, or being in contact with a protective layer containing a mixture as recited in any of the first to seventh aspects.

An eleventh aspect is a power storage device having an electrode as recited in the ninth aspect or a separator as recited in the tenth aspect.

### ADVANTAGEOUS EFFECTS OF INVENTION

According to the mixture of the present invention and the sheet, the electrode, the separator, and the power storage device of the invention each containing the mixture, diffusion of a substance at the interface between inorganic particles and the electrolytic solution can be enhanced.

### BRIEF DESCRIPTION OF DRAWINGS

[FIG. 1] Cross-sectional view of a power storage device of a first embodiment.
[FIG. 2] Enlarged cross-sectional view of a part of the power storage device denoted by reference numeral II in FIG. 1.
[FIG. 3] A schematic view of garnet-type crystal structure.
[FIG. 4] Cross-sectional view of a power storage device of a second embodiment.
[FIG. 5] Cross-sectional view of a power storage device of a third embodiment.
[FIG. 6] Cross-sectional view of an insulator of a fourth embodiment (a); cross-sectional view of an electrode of a fifth embodiment (b); and cross-sectional view of an electrode of a sixth embodiment (c).
[FIG. 7] Graph showing the correlation between the mole fraction of a second compound in a mixture having an inorganic particles : electrolytic solution ratio of 55:45 (by volume) with bulk ion conductivity (a); and graph showing the correlation between the mole fraction of a second compound in a mixture having an inorganic particles : electrolytic solution ratio of 61:39 (by volume) with bulk ion conductivity (b).

### DESCRIPTION OF EMBODIMENTS

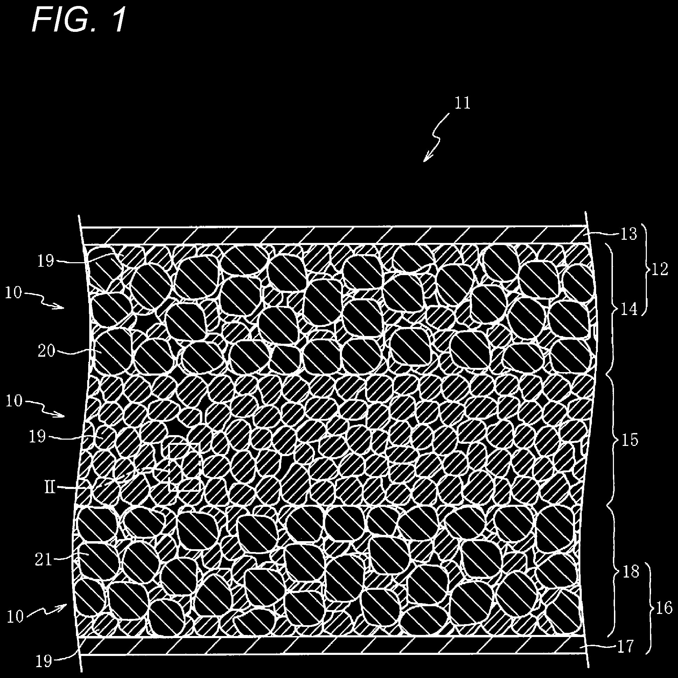

Hereinafter, preferred embodiments of the present invention will be described with reference to attached drawings. FIG. 1 is a schematic cross-section of a power storage device 11 of a first embodiment, containing a mixture 10. The power storage device 11 corresponds to an element which achieves mutual conversion between chemical energy and electric energy. In the power storage device 11, examples of the ion species involved in energy conversion (hereinafter referred to as an "electric charge carrier") include cations such as Li⁺, Na⁺, K⁺, Mg²⁺, Cu⁺, and Ag⁺.

Examples of the power storage device 11 include secondary batteries such as a lithium ion battery, a sodium ion battery, a potassium ion battery, a magnesium ion battery, and a calcium ion battery; and an electrochemical capacitor. Examples of the electrochemical capacitor include an electric double-layer capacitor, a redox capacitor employing a redox reaction between electrodes or of ions in a non-aqueous electrolytic solution, and a hybrid capacitor which is a combination of an electric double-layer with redox reaction or a combination thereof with a secondary battery material.

The power storage device 11 includes, from top to bottom, a positive electrode layer 12, a separator 15, and a negative electrode layer 16. The positive electrode layer 12, the separator 15, and the negative electrode layer 16 are accommodated in a case (not illustrated). Next, the case in which the power storage device 11 corresponds to a lithium ion battery will be described.

The positive electrode layer 12 includes a current-collecting layer 13 and an active material layer 14 stacked thereon. The current-collecting layer 13 is a member having an electrical conductivity. Examples of the material of the current-collecting layer 13 include metals selected from among Ni, Ti, Fe, and Al; alloys each containing two or more of such metal elements; stainless steel; and carbon material.

The active material layer 14 contains a mixture 10 and an active material 20. The mixture 10 contains inorganic particles 19. For lowering the electrical resistance of the active material layer 14, the active material layer 14 may contain a conducting aid. Examples of the conducting aid include carbon black, acetylene black, Ketjen black, carbon fiber, Ni, Pt, and Ag.

Examples of the active material 20 include a metal oxide in which the metal includes a transition metal, a sulfur-containing active material, and an organic active material. Examples of the metal oxide in which the metal includes a transition metal include a metal oxide in which the metal includes Li and at least one species selected from among Mn, Co, Ni, Fe, Cr, and V. Specific examples of the metal oxide in which the metal includes a transition metal include LiCoO₂, LiNi_{0.8}Co_{0.15}Al_{0.05}O₂, LiMn₂O₄, LiNiVO₄, LiNi_{0.5}Mn_{1.5}O₂, LiNi_{1/3}Mn_{1/3}Co_{1/3}O₂, and LiFePO₄.

In order to suppress reaction between the active material 20 and the inorganic particles 19, a coating layer may be provided on the surface of the active material 20. Examples of the material of the coating layer include Al₂O₃, ZrO₂, LiNbO₃, Li₄Ti₅O₁₂, LiTaO₃, LiNbO₃, LiAlO₂, Li₂ZrO₃, Li₂WO₄, Li₂TiO₃, Li₂B₄O₇, Li₃PO₄, and Li₂MoO₄.

Examples of the sulfur-containing active material include S, TiS₂, NiS, FeS₂, Li₂S, MoS₃, and a sulfur-carbon composite. Examples of the organic active material include radical compounds such as 2,2,6,6-tetramethylpiperidinoxyl-4-yl methacrylate and polytetramethylpiperidinoxyl vinyl ether; quinone compounds; radialene compounds; tetracyanoquinodimethane; and phenazine oxide.

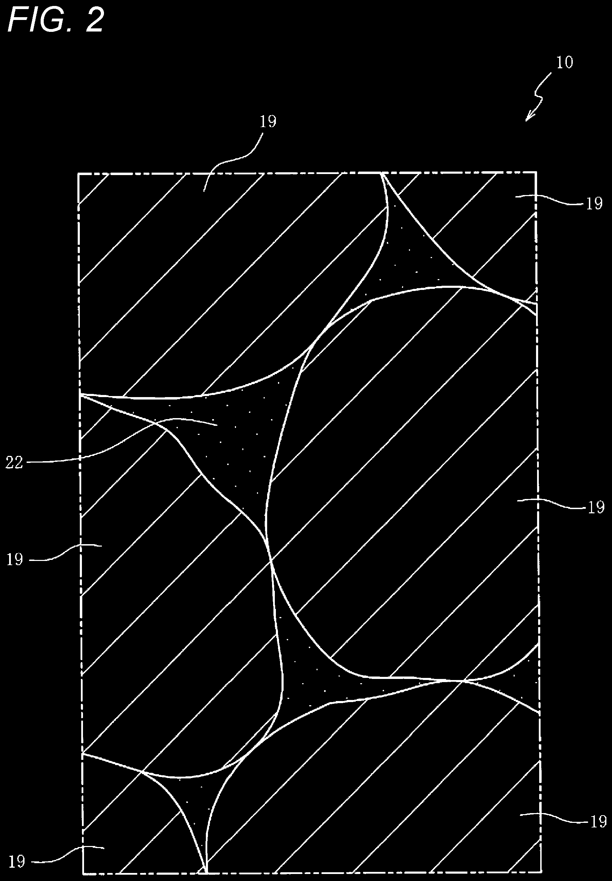

The separator 15 is formed of the mixture 10. The mixture 10 contains the inorganic particles 19 and an electrolytic solution 22 (see FIG. 2). The mixture 10 may further contain a binder.

The negative electrode layer 16 is formed of a current-collecting layer 17 and an active material layer 18 stacked thereon. The current-collecting layer 17 is a member having an electrical conductivity. Examples of the material of the current-collecting layer 17 include metals selected from among Ni, Ti, Fe, Cu, and Si; alloys each containing two or more of such metal elements; stainless steel; and carbon material.

The active material layer 18 contains the mixture 10 and an active material 21. For lowering the electrical resistance of the active material layer 18, the active material layer 18 may contain a conducting aid. Examples of the conducting aid include carbon black, acetylene black, Ketjen black, carbon fiber, Ni, Pt, and Ag. Examples of the active material 21 include Li, Li-Al alloy, Li₄Ti₅O₁₂, graphite, In, Si, Si-Li alloy, and SiO_{X} (e.g., 0.5<X<1.5). Similar to the separator 15, any of the active material layers 14 and 18 may contain a binder.

FIG. 2 is an enlarged cross-sectional view of a part of the power storage device 11 denoted by reference numeral II in FIG. 1. The mixture 10 included in the power storage device 11 contains inorganic particles 19 and an electrolytic solution 22. The inorganic particles 19 are preferably insoluble in the electrolytic solution 22 and have no electron conductivity. Examples of the form of the inorganic particles 19 include particle, ball, rod, needle, polygon, fiber, and flake. The inorganic particles 19 are formed from an inorganic compound appropriately chosen from alumina, silica, ceria, zirconia, oxide-based solid electrolyte, etc.

Examples of the oxide-based solid electrolyte include those having a crystal structure of a perovskite-type, a NASICON-type, a LISICON-type, or a garnet-type including Li, La, and Zr. Examples of the perovskite-type oxide include an oxide including at least Li, Ti, and La; e.g., La_{2/3-X}Li_{3X}TiO₃. Examples of the NASICON-type oxide include an oxide including at least Li, M (M: one or more elements selected from Ti, Zr, and Ge), and P; e.g., Li(Al,Ti)₂(PO₄)₃ and Li(Al,Ge)₂(PO₄)₃. Examples of the LISICON-type oxide include Li₁₄Zn(GeO₄)₄. The garnet-type crystal structure is represented by a general formula C₃A₂B₃O₁₂.

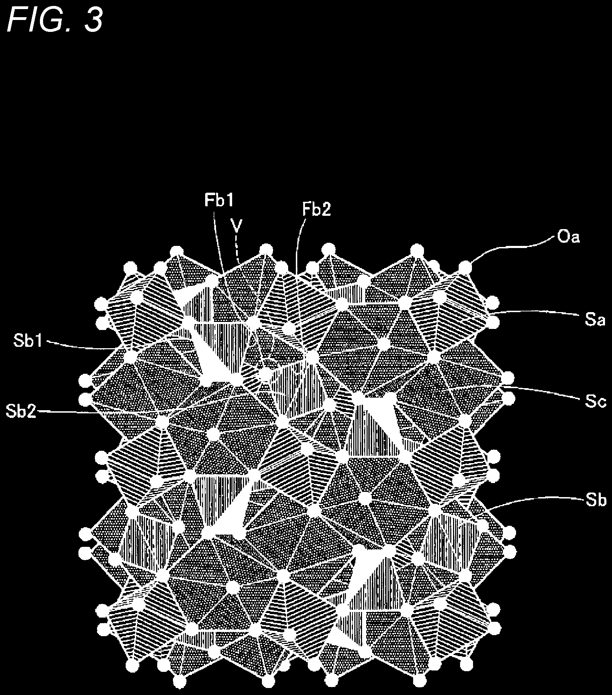

FIG. 3 is a schematic view of a garnet-type crystal structure. In the garnet-type crystal structure, a C site (Sc) coordinates with an oxygen atom (Oa) in a dodecahedral manner; an A site (Sa) with an oxygen atom (Oa) in an octahedral manner; and a B site (Sb) with an oxygen atom (Oa) in a tetrahedral manner. The inorganic particles 19 generally have a garnet-type crystal structure, but Li may be present in a site (i.e., vacancy V), which is a site realizing octahedral coordination with an oxygen atom (Oa). The vacancy V is present at a site disposed, for example, between a B site (Sb1) and a B site (Sb2). The Li present in vacancy V coordinates, in an octahedral manner, with oxygen atoms (Oa) forming an octahedral structure which includes tetrahedral faces Fb1 and Fb2, in which Fb1 forms the B site (Sb1), and Fb2 forms the B site (Sb2). In one possible case, in Li₇La₃Zr₂O₁₂ having a garnet-type crystal structure, La is present in the C sites (Sc); Zr in the A sites (Sa), and Li in the B sites (Sb) and the vacancy (V).

The garnet-type crystal structure exhibits an XRD pattern similar to that of an X-ray diffraction file No. 422259 (Li₇La₃Zr₂O₁₂) of CSD (Cambridge Structural Database). As compared with No. 422259, the inorganic particles 19 may have differences in the type of elements forming oxide, the Li concentration, and the like. Therefore, diffraction angle and intensity ratio may vary. A typical crystal structure in relation to the above is a cubic system (space group: Ia-3d ("-" is an over-line representing rotary inversion), JCPDS:84-1753). Any of a tetragonal Li₇La₃Zr₂O₁₂, having low ion conductivity, and a cubic Li₇La₃Zr₂O₁₂, having high ion conductivity, may be employed.

In the oxide having a garnet-type crystal structure including Li, La, and Zr, a part of the elements forming the oxide may be substituted by another element, or a small amount of additional element may be added thereto without substituting the original elements. Examples of the additional element include at least one element selected from the group consisting of Mg, Al, Si, Ca, Ti, V, Ga, Sr, Y, Nb, Sn, Sb, Ba, Hf, Ta, W, Bi, Rb, and lanthanoids (except for La).

Examples of the material of the inorganic particles 19 include Li₆La₃Zr_{1.5}W_{0.5}O₁₂, Li_{6.15}La₃Zr_{1.75}Ta_{0.25}Al_{0.2}O₁₂, Li_{6.15}La₃Zr_{1.75}Ta_{0.25}Ga_{0.2}O₁₂, Li_{6.25}La₃Zr₂Ga_{0.25}O₁₂, Li_{6.4}La₃Zr_{1.4}Ta_{0.6}O₁₂, Li_{6.5}La₃Zr_{1.75}Te_{0.25}O₁₂, Li_{6.75}La₃Zr_{1.75}Nb_{0.25}O₁₂, Li6.9La3Zr1.675Ta0.289Bi0.036O12, Li6.46Ga0.23La3Zr1.85Y0.15O12, Li6.8La2.95Ca0.05Zr1.75Nb0.25O12, Li_{7.05}La_{3.00}Zr_{1.95}Gd_{0.05}O₁₂, and Li_{6.20}Ba_{0.30}La_{2.95}Rb_{0.05}Zr₂O₁₂.

In addition to Li, La, and Zr, preferably, the oxide having a garnet-type crystal structure contains at least one of Mg and element A (A represents at least one element selected from the group consisting of Ca, Sr, and Ba), and satisfies all the following conditions (1) to (3) regarding mole proportions of the elements. Alternatively, preferably, the oxide contains both Mg and element A, and satisfies all the following conditions (4) to (6) regarding mole proportions of the elements. From the viewpoint of elevating the ion conductivity of the inorganic particles 19, element A is preferably Sr.
(1) $1.33 \leq Li / \left(La+A\right) \leq 3$
(2) $0 \leq Mg / \left(La+A\right) \leq 0.5$
(3) $0 \leq A / \left(La+A\right) \leq 0.67$
(4) $2.0 \leq Li / \left(La+A\right) \leq 2.6$
(5) $0.01 \leq Mg / \left(La+A\right) \leq 0.14$
(6) $0.04 \leq A / \left(La+A\right) \leq 0.17$

With reference again to FIG. 2, the median diameter, as the circle-equivalent diameter, of the inorganic particles 19 emerging in a cross-section of the separator 15 is preferably 0.2 to 10 µm, more preferably 0.2 to 10 µm. The preference of the median diameter is based on adjustment the surface areas of the inorganic particles 19 to an appropriate value so as to enhance diffusion performance of components of the electrolytic solution 22.

For determining the median diameter of the inorganic particles 19, firstly, a cross-sectional SEM (scanning electron microscopic) image of the inorganic particles 19 is analyzed. The inorganic particles 19 emerge in the cross-section of the separator 15 (e.g., a polished surface, a surface obtained through irradiation with a focused ion beam (FIB), or a surface obtained through ion milling). Then, a circle-equivalent diameter (i.e., a diameter of a circle having an area equivalent to that of the inorganic particle 19) is calculated from the area of each inorganic particle 19, to thereby determine the volume-basis particle size distribution. The median diameter is defined as a circle-equivalent diameter at which the cumulative value of the frequency in the particle size distribution is 50%. The area of the SEM image for determining the particle size distribution is adjusted to 400 µm² or more of the area in the separator 15, for securing the accuracy.

The electrolytic solution 22 contains an electrolyte salt dissolved in a solvent. The electrolyte salt is a compound employed for the transfer of cations between the positive electrode layer 12 and the negative electrode layer 16. When the electrolyte salt is a lithium salt, examples of the anion of the lithium salt include halide anions (e.g., I⁻, Cl⁻, and Br⁻), SCN⁻, BF₄⁻, BF₃(CF₃)⁻, BF₃(C₂F₅)⁻, PF₆⁻, ClO₄⁻, SbF₆⁻, N(SO₂F)₂⁻, N(SO₂CF₃)₂⁻, N(SO₂C₂F₅)₂⁻, B(C₆H₅)₄⁻, B(O₂C₂H₄)₂⁻, C(SO₂F)₃⁻, C(SO₂CF₃)₃⁻, CF₃COO⁻, CF₃SO₂O⁻, C₆F₅SO₂O⁻, B(O₂C₂O₂)₂⁻, and RCOO⁻ (wherein R represents a C1 to C4 alkyl group, a phenyl group, or a naphthyl group).

The anion of the lithium salt is preferably a sulfonylimide anion, having a sulfonyl group -S(=O)₂-, such as N(SO₂F)₂⁻, N(SO₂CF₃)₂⁻, or N(SO₂C₂F₅)₂⁻. Sulfonylimide anion is advantageous, since it does not actively cause a rise in viscosity of electrolytic solution and a drop in ion conductivity, even when the salt concentration increases. In addition, formation of a coating film (SEI) having high stability and low electrical resistance can suppress decomposition of electrolytic solution via chemical reduction and widen the reduction-side potential window. Particularly, the lithium salt is preferably lithiumbis(fluorosulfonyl)imide (LiFSI), since LiFSI does not actively cause a rise in viscosity of electrolytic solution and effectively forms suitable solid electrolyte interphase (SEI).

The solvent of the electrolytic solution 22 contains a first compound represented by chemical formula (1) and a second compound represented by chemical formula (2) or (3). The solvent employed in the electrolytic solution 22 may be a plurality of members appropriately chosen from the following group of materials.

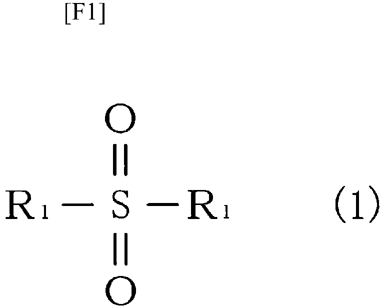

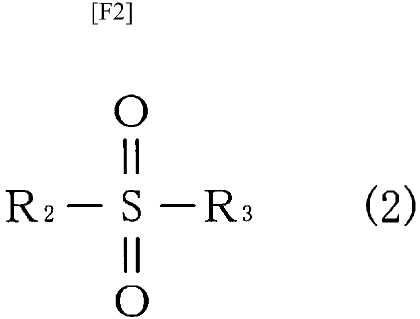

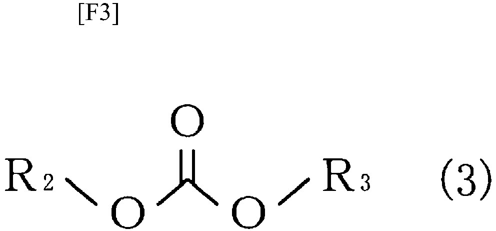

In chemical formulas (1), (2), and (3), each of R₁, R₂, and R₃ independently represents a C≤4 alkyl group, alkoxyl group, alkenyl group, alkynyl group, or halogenated alkyl group, or the alkyl group, alkoxyl group, alkenyl group, alkynyl group, or halogenated alkyl group are bound together to form a ring structure. Each of R₁, R₂, and R₃ may be a linear-chain hydrocarbon group or a hydrocarbon group having a branched ring structure. Since R₁ and R₁ are identical to each other, and R₂ and R₃ are different from each other, the chemical formula (1) represents a compound having a symmetric molecular structure, and each of the chemical formulas (2) and (3) represents a compound having an asymmetric molecular structure.

Examples of the C≤4 alkyl group include methyl, ethyl, n-propyl, isopropyl, 1-ethylpropyl, n-butyl, isobutyl, sec-butyl, tert-butyl, 2-methylbutyl, and 3,3-dimethylbutyl. These groups are represented by a general formula CₙH₂ₙ₊₁-. Examples of the C≤4 alkoxyl group include a group formed by bonding an oxygen atom to any of the alkyl groups.

Examples of the C≤4 alkenyl group include vinyl, 1-propenyl, allyl, 1-butenyl, 2-butenyl, and 3-butenyl. These groups are represented by a general formula CₙH₂ₙ₋₁-.

The C≤4 alkynyl group is a monovalent group represented by a general formula CₙH₂ₙ₋₃-. The group is formed by removing one hydrogen atom from any carbon atom of an alkyne represented by a general formula CₙH₂ₙ₋₂, which is an acyclic branched or non-branched hydrocarbon having one carbon-carbon triple bond.

Examples of the C≤4 halogenated alkyl group include fluoromethyl, difluoromethyl, trifluoromethyl , 2,2,2-trifluoroethyl, 1,1,2,2-tetrafluoroethyl, perfluoroethyl, 2,2,3,3-tetrafluoropropyl, perfluoropropyl, perfluoroisopropyl, perfluorobutyl, perfluoroisobutyl, chloromethyl, dichloromethyl, trichloromethyl, 2,2,2-trichloroethyl, 1,1,2,2-tetrachloroethyl, perchloroethyl, 2,2,3,3-tetrachloropropyl, perchloropropyl, perchloroisopropyl, perchlorobutyl, perchloroisobutyl, bromomethyl, dibromomethyl, tribromomethyl, 2,2,2-tribromoethyl, 1,1,2,2-tetrabromoethyl, 2,2,3,3-tetrabromopropyl, iodomethyl, diiodomethyl, triiodomethyl, 2,2,2-triiodoethyl, 1,1,2,2-tetraiodoethyl, and 2,2,3,3-tetraiodopropyl.

In the chemical formula (1) representing the first compound, examples of the cyclic compound having a symmetric structure in which the alkyl group, alkoxyl group, alkenyl group, alkynyl group, or halogenated alkyl group are bound together to form a ring structure include trimethylene sulfone, sulfolane, difluorosulfolane, and dimethyl sulfolane. Examples of the acyclic compound having a symmetric structure in the chemical formula (1) include dimethyl sulfone and diethyl sulfone. The sulfone compound represented by the chemical formula (1) is advantageous for achieving high voltage of the power storage device 11 by virtue of high oxidation resistance.

In the chemical formula (2) representing the first compound, examples of the cyclic compound having an asymmetric structure in which the alkyl group, alkoxyl group, alkenyl group, alkynyl group, or halogenated alkyl group are bound together to form a ring structure include monofluorosulfolane and 3-methylsulfolane. Examples of the acyclic compound having a symmetric structure in the chemical formula (2) include ethyl methyl sulfone and ethyl isopropyl sulfone.

In the chemical formula (3) representing the second compound, examples of the cyclic compound having an asymmetric structure in which the alkyl group, alkoxyl group, alkenyl group, alkynyl group, or halogenated alkyl group are bound together to form a ring structure include propylene carbonate, 1,2-butylene carbonate, 1,2-pentylene carbonate, fluoroethylene carbonate, and trifluoromethylethylene carbonate. Examples of the acyclic compound having an asymmetric structure in the chemical formula (3) include ethyl methyl carbonate.

The mole fraction of the amount of the second compound with respect to the total amount of the first compound and the second compound is more than 0.2 and less than 0.5. Conceivably, the electrolytic solution containing the first compound having a symmetric molecular structure and the second compound having an asymmetric molecular structure mixed at the aforementioned ratio, the order of solvent molecules in the vicinity of the interface between the inorganic particles and the electrolytic solution decreases, whereby the interaction between the inorganic particles and solvent molecules is weakened, resulting in an increase in motility of molecules in the vicinity of the interface and enhancement in motility of electric charge carriers.

No particular limitation is imposed on the salt concentration of the electrolytic solution 22. However, the salt concentration (molarity) of the electrolytic solution 22 is preferably 1.4 mol/kg or higher, suitably 1.6 mol/kg or higher. As compared with a generally employed electrolytic solution having a salt concentration of about 1 mol/kg, the number of solvent molecules coordinating to a cation increases (i.e., the number of non-coordinating solvent molecules decreases), whereby the transport number of cations of the electrolyte salt can be elevated.

The electrolytic solution 22 may contain a solvated ion liquid. The solvated ion liquid is composed of a cation solvated to the compound represented by chemical formula (1) and a counter ion of the cation. The electrolytic solution 22 may be in a state in which all the solvent molecules coordinate to cations in the absence of non-coordinating solvent molecules, or in a state in which all the solvent molecules coordinate to cations in the absence of non-coordinating solvent molecules, and, furthermore, excess cations not coordinated with solvent molecules are present. In the electrolytic solution 22 having high salt concentration in which cations are solvated to the compound represented by chemical formula (1), it is known that the electrolytic solution has an intrinsic coordination structure when the solution assumes a solvated ion liquid, to thereby accelerate the speed of transporting electric charge carriers.

In addition to the first compound and the second compound, the mixture 10 may further contain an additional solvent. For example, the additional solvent can reduce the viscosity of the electrolytic solution 22, to thereby elevate ion conductivity of the electrolytic solution 22. Examples of the additional solvent include ethylene carbonate, dimethyl carbonate, diethyl carbonate, cis-2,3-butylene carbonate, trimethyl phosphate, triethyl phosphate, γ-butyrolactone, dimethyl methylphosphonate, acetonitrile, isobutyl methyl ketone, nitromethane, methyl ethyl ketone, tetramethylsilane, a siloxane compound, and an organic silicic acid compound. The additional solvent is appropriately selected from one or more solvents which do not easily affect the coordination state of cations and solvent molecules.

The mixture 10 may contain various additives which are employed in a lithium ion battery. Examples of such additives include an over-charging preventing agent such as a carbonate compound having an unsaturated bond (e.g., vinylene carbonate); a flame-retardant compound (e.g., ion liquid); a redox shuttle compound and an aromatic compound such as an acid anhydride, a nitrile compound, and an anisole derivative.

The relative amounts (wt%) of the first compound and the second compound with respect to the total amount of the first compound, the second compound, and the additional solvent contained in the mixture 10 is preferably 75% or more, for securing the transport number of cations.

The salt concentration of the electrolytic solution 22 is preferably 4.0 mol/kg or lower. When the salt concentration of the electrolytic solution 22 exceeds 4.0 mol/kg, the viscosity of the electrolytic solution 22 generally increases, whereby ion conductivity decreases in many cases. The electrolyte concentration of the electrolytic solution 22 is determined through, for example, the following procedure. Here, determination of the lithium salt concentration of the mixture 10 forming the separator 15 will be described. However, the lithium salt concentration of the mixture 10 forming the active material layer 14 or 18, or the electrolyte salt concentration in terms of a salt other than the lithium salt can also be determined in the same manner.

Firstly, the separator 15 is crushed, and the crushed product is dissolved in a solvent, to thereby dissolve the electrolytic solution 22 contained in the separator 15 in the solvent. Subsequently, the mixture is separated into a solid component and a liquid component through centrifugation or filtration. The thus-isolated liquid component is subjected to highfrequency inductively coupled plasma (ICP) analysis, to thereby determine the Li content.

Also, the species of the solvent contained in the separator 15 is characterized through, for example, gas chromatography-mass analysis (GC-MS). A calibration curve of the characterized solvent (hereinafter referred to as a "standard substance") is drawn, and the solvent content of the separator 15 is determined on the basis of the relevant area in the chromatogram. Alternatively, a standard substance and the separator 15 are analyzed through thermogravimetry differential thermal analysis (TG-DTA). By comparing the analytical results of the standard substance with those of the separator 15, the solvent content of the separator 15 is determined. From the Li content of the liquid component and the solvent content of the separator 15, the lithium salt concentration (molarity: mol/kg) of the electrolytic solution 22 is determined.

The mixture 10 preferably has no glass transition temperature within a range of 25°C to -100°C, as observed through differential scanning calorimetry (DSC). The term "glass transition temperature" refers to a temperature at which the base line of a DSC curve has been shifted by 0.1 W/g or more, regardless of the emerging of an exothermic peak or an endothermic peak. "g" denotes a total mass (g) of the solvent components other than the lithium salt (e.g., the first compound and the second compound) contained in the mixture 10. In the case where the mass of the solvent components other than the lithium salt contained in the mixture 10 has not been determined, the mass may be determined by analyzing the mixture 10 through an appropriate combination of, for example, gas chromatography mass analysis, liquid chromatography mass analysis, thermogravimetry, infrared spectrometry, and nuclear magnetic resonance spectrometry, so as to analyze and determine the components forming the electrolytic solution 22. Conceivably, the absence of a glass transition temperature corresponds to a state in which the interfacial structure of the inorganic particles 19 is disordered to evoke high mobility of molecules.

The mixture 10 preferably has a peak top temperature attributed to an endothermic peak as observed within a temperature elevation range from -100°C to -20°C in DSC. The presence of a peak top temperature attributed to an endothermic peak as observed within a temperature elevation range from -100°C to -20°C in DSC corresponds to that the mixture 10 has a structure which undergoes phase transition within a range of -100°C to -20°C. Conceivably, the structure attributes to high ion conductivity of the mixture 10 at room temperature.

In the case where the diffusivity of substance at the interface between the inorganic particles 19 is significant, when de-solvation of cations or dissociation of an ion pair occurs at the interface between the inorganic particles 19 and the electrolytic solution 22 upon application of current through the mixture 10, the concentration gradient in terms of eliminated solvent molecules or anions can be easily reduced. As a result, conceivably, de-solvation at the interface between the inorganic particles 19 and the electrolytic solution 22 is facilitated, to thereby reduce the interfacial resistance of the inorganic particles 19. In addition, the ion concentration gradient in the electrolytic solution 22 evoked in charge/discharge is also facilitated. Thus, rate characteristics of the power storage device 11 are enhanced, whereby quick charge performance and power density are expected to be enhanced. Further, in the case where the diffusion rate of a decomposition product involved in charge/discharge of the power storage device 11 also increases, cycle life is expected to be enhanced through reduction of deposition of the decomposition product.

In the mixture 10, the ratio of the volume of the inorganic particles 19 to the total volume of the inorganic particles 19 and the electrolytic solution 22 is preferably 52% or greater and less than 100%, more preferably 61% or greater and less than 100%. The ratio of the volume of the inorganic particles 19 to the total volume of the inorganic particles 19 and the electrolytic solution 22 is particularly preferably 93% or less. Through an appropriate combination of the inorganic particles 19 with the electrolytic solution 22, the transport number of the charge carriers in the mixture 10 can be elevated to be greater than that of a conventional electrolytic solution 22. As a result, operational stability of the power storage device 11 employing the mixture 10 can be enhanced.

Each of the inorganic particle 19 content and the electrolytic solution 22 content (vol%) is determined through the following procedure. Specifically, the separator 15 is frozen or embedded in 4-functional epoxy resin or the like to solidify. Then, a vision field (×5,000) selected at random from a cross-section of the separator 15 is analyzed under a SEM equipped with an energy dispersive X-ray spectrometer (EDS). In the analysis, distribution of elements (La, Zr, and S) is characterized, or image analysis of a backscattered electron image is conducted in terms of contrast, to thereby determine the area attributed to each of the inorganic particles 19 and the electrolytic solution 22. The relative area in the cross-section of the separator 15 with respect to the area of the mixture 10 in the separator 15 is considered as the corresponding volume ratio, to thereby derive the inorganic particle 19 content and the electrolytic solution 22 content (vol%).

The mixture 10 may contain a binder for binding the inorganic particles 19. Examples of the binder include a fluororesin, polyolefin, polyimide, polyvinylpyrrolidone, poly(vinyl alcohol), cellulose ether, and rubber polymer such as styrene-butadiene rubber. Examples of the fluororesin include vinylidene fluoride-based polymer, poly(chlorotrifluoroethylene), poly(vinyl fluoride), tetrafluoroethylene-perfluoroalkyl vinyl ether copolymer, tetrafluoroethylene-hexafluoropropylene copolymer, ethylene-tetrafluoroethylene copolymer, and ethylene-chlorotrifluoroethylene copolymer.

Examples of the vinylidene fluoride-based polymer include a vinylidene fluoride homopolymer and a copolymer of vinylidene fluoride and a copolymerizable monomer. Examples of the copolymerizable monomer include a halogen-containing monomer (except for vinylidene fluoride) and a non-halogen copolymerizable monomer. Examples of the halogen-containing monomer include chlorine-containing monomers such as vinyl chloride; and fluorine-containing monomers such as trifluoroethylene, tetrafluoroethylene, chlorotrifluoroethylene, hexafluoropropylene, and perfluoroalkyl vinyl ether. Examples of the non-halogen copolymerizable monomer include olefins such as ethylene and propylene; acrylic monomers such as acrylic acid, methacrylic acid, an ester thereof, and a salt thereof; and vinyl monomers such as acrylonitrile, vinyl acetate, and styrene. Polymerization of one or more copolymerizable monomers with vinylidene fluoride forms a copolymer of interest.

The power storage device 11 is fabricated through, for example, the following procedure. Firstly, an electrolytic solution 22 containing an electrolyte salt dissolved in a solvent is mixed with the inorganic particles 19, to thereby form the mixture 10. The mixture is further mixed with a binder dissolved in a solvent, to thereby prepare a slurry. The slurry is molded into a sheet, followed by drying, to thereby yield a green sheet (i.e., an electrolyte sheet) for providing the separator 15.

Separately, a mixture 10 prepared by mixing an electrolytic solution 22 containing an electrolyte salt dissolved in a solvent with the inorganic particles 19. The resultant mixture is further mixed with the active material 20. Then, the mixture is further mixed with a solution formed by dissolving a binder in a solvent, to thereby prepare a slurry. The slurry is applied onto the current-collecting layer 13, followed by drying, to thereby yield a green sheet (i.e., a positive electrode sheet) for providing the positive electrode layer 12.

Yet separately, a mixture 10 prepared by mixing an electrolytic solution 22 containing an electrolyte salt dissolved in a solvent with the inorganic particles 19. The resultant mixture is further mixed with the active material 21. Then, the mixture is further mixed with a solution formed by dissolving a binder in a solvent, to thereby prepare a slurry. The slurry is applied onto the current-collecting layer 17, followed by drying, to thereby yield a green sheet (i.e., a negative electrode sheet) for providing the negative electrode layer 16.

The electrolyte sheet, the positive electrode sheet, and the negative electrode sheet are cut into shapes of interest, respectively. Then, the positive electrode sheet, the electrolyte sheet, and the negative electrode sheet are stacked in that order, and the stacked product is pressed, to thereby form an assembly. A terminal (not illustrated) is connected to each of the current-collecting layer 13 and 17, and the product is placed in a case (not illustrated), then closing the case, whereby the power storage device 11 including the positive electrode layer 12, the separator 15, and the negative electrode layer 16 is fabricated.

Needless to say, instead of yielding the positive electrode layer 12, separator 15, and negative electrode layer 16 by forming corresponding sheets from each slurry containing the mixture 10, those skilled in the art can form the separator15 through press-molding the mixture 10, and the positive electrode layer 12 or the negative electrode layer 16 through press-molding the mixture 10 containing the active material 20 or the active material 21.

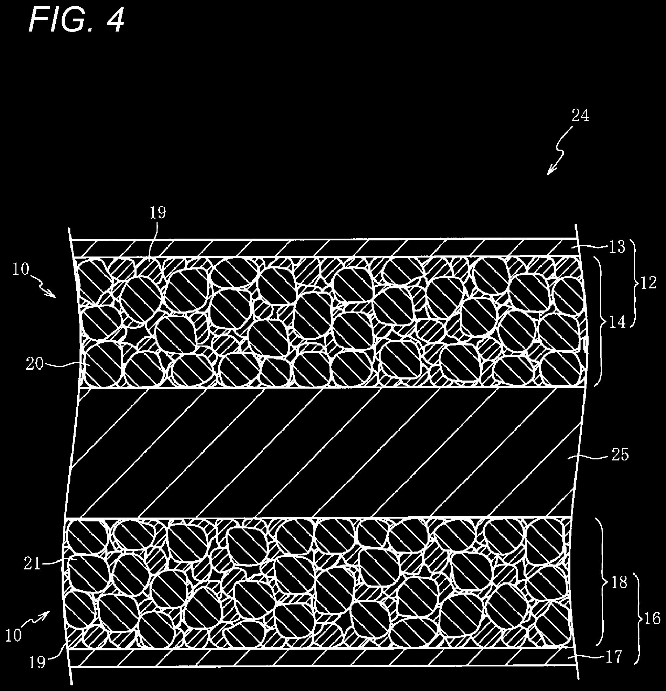

With reference to FIG. 4, a second embodiment will be described. In the first embodiment, there has been described a case in which the power storage device 11 in which the separator 15 has been formed by molding the mixture 10. In the second embodiment, a case in which the mixture 10 is employed in a liquid-type lithium ion battery using a non-aqueous electrolytic solution as an electrolyte will be described. In the second embodiment, the same members as described in the first embodiment are denoted by the same reference numerals, and further descriptions thereof will be omitted. FIG. 4 is a cross-section of a power storage device 24 of the second embodiment.

The power storage device 24 includes the positive electrode layer 12, a separator 25, and the negative electrode layer 16 in that order. The stacked product is built in a case (not illustrated). The separator 25 has durability to the active materials 20 and 21 contained in the positive electrode 12 and a negative electrode 16 and to an electrolytic solution and is formed of a porous body which allows passage of lithium ions but has no electron conductivity. Examples of the separator 25 include a nonwoven fabric and a porous membrane formed of cellulose, polypropylene, polyethylene, polyimide, alumina, etc. Since the non-aqueous electrolytic solution is the same as employed in the first embodiment, further descriptions are omitted.

Since the power storage device 24 of the second embodiment contains the mixture 10 in the positive electrode layer 12 or the negative electrode layer 16, operational stability is enhanced, similar to the case of the power storage device 11 of the first embodiment.

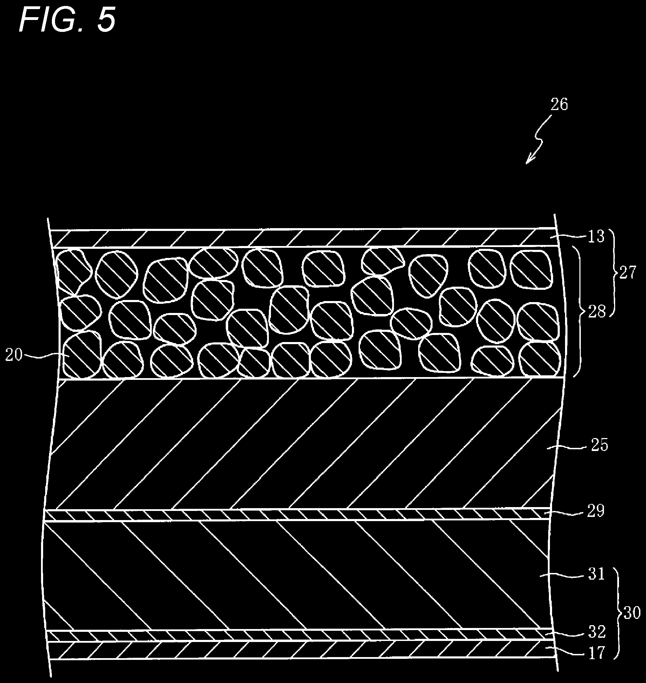

With reference to FIG. 5, a third embodiment will be described. In the first and second embodiments, a case in which the mixture 10 is employed in the positive electrode layer 12, the separator 15, or the negative electrode layer 16 has been described. In the third embodiment, there will be described a case in which the mixture 10 is employed in a protective layer 29 or 32. In the third embodiment, the same members as described in the first or second embodiment are denoted by the same reference numerals, and further descriptions thereof will be omitted. FIG. 5 is a schematic cross-section of a power storage device 26 of the third embodiment.

The power storage device 26 includes a positive electrode layer 27, the separator 25, and a negative electrode layer 30 in that order. The stacked product is built in a case (not illustrated). The power storage device 26 corresponds to a liquid-type lithium ion battery employing a non-aqueous electrolytic solution as an electrolyte.

The positive electrode layer 27 is formed of the current-collecting layer 13 and an active material layer 28 stacked thereon. The active material layer 28 contains an active material 20. In order to lower the resistance of the active material layer 28, the active material layer 28 may contain a conducting aid such as carbon black, acetylene black, Ketjen black, carbon fiber, Ni, Pt, and Ag.

A protective layer 29 intervenes between the separator 25 and the negative electrode layer 30. The protective layer 29 contains the mixture 10.

The negative electrode layer 30 includes an active material layer 31, a protective layer 32, and a current-collecting layer 17 stacked in that order. Examples of the material of the active material layer 31 include Li, Li-Al alloy, Li-Sn alloy, Li-Si alloy, Li-Mg alloy, Li-Si alloy, and Si-Li alloy. The protective layer 32 contains the mixture 10. The protective layers 29 and 32 are provided through, for example, stacking sheet-form molded bodies by use of a slurry containing the mixture 10, or application of a slurry containing the mixture 10 onto the separator 25 or the current-collecting layer 17.

When the inorganic particles 19 form an oxide-type solid electrolyte which has a garnet-type crystal structure including Li, La, and Zr, the inorganic particles 19 have resistance to chemical reduction by metallic lithium contained in the active material layer 31. As a result, operational stability of the power storage device 26 increases by virtue of the protective layer 29. In addition, the protective layer 29 suppresses short circuit possibly caused by dendritic growth of metallic lithium. The protective layer 32 intervening between the active material layer 31 and the current-collecting layer 17 suppresses degradation of the current-collecting layer 17.

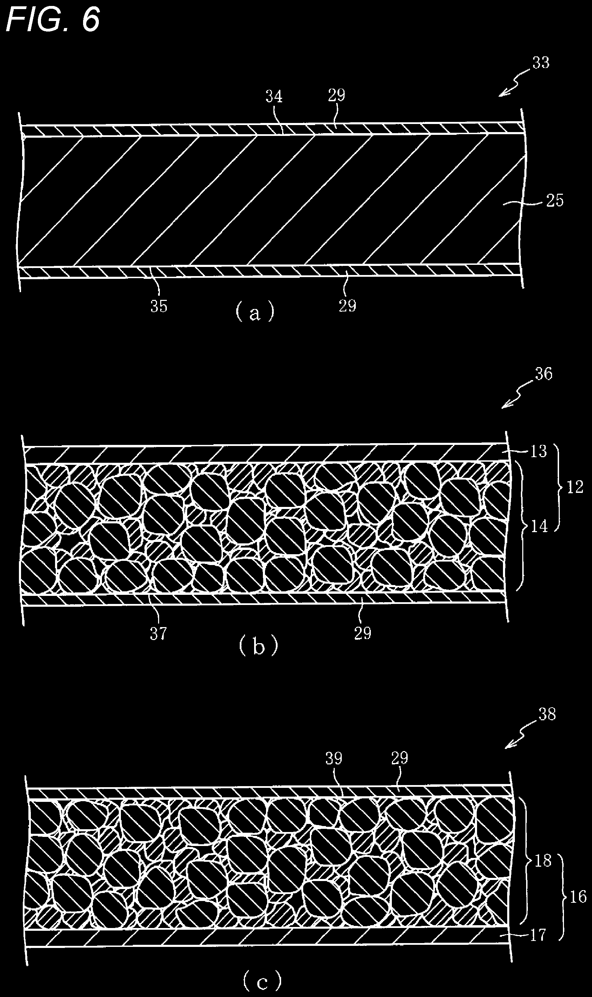

With reference to FIG. 6, fourth to sixth embodiments will be described. In the embodiments, the same members as described in the first to third embodiments are denoted by the same reference numerals, and further descriptions thereof will be omitted. (a) of FIG. 6 is a cross-section of an insulator 33 of the fourth embodiment.

The insulator 33 includes the separator 25 and a protective layer 29 in contact with the separator 25. The separator 25 includes a first interface 34 and a second interface 35 oppositely facing the first interface 34. A protective layer 29 is disposed on each of the first interface 34 and the second interface 35. By virtue of the protective layer 29 disposed on the separator 25, short circuit possibly caused by dendritic growth of metallic lithium contained in the power storage device can be suppressed. Even though short circuit occurs in the power storage device, resulting in thermal deformation of the separator 25, the shape of the separator 25 is maintained by virtue of the protective layer 29, whereby crushing of the power storage device due to overheating is suppressed.

(b) of FIG. 6 is a cross-section of an electrode 36 of the fifth embodiment. The electrode 36 includes the positive electrode layer 12 and the protective layer 29 in contact with the active material layer 14 of the positive electrode layer 12. In the electrode 36, the protective layer 29 is disposed on an interface 37 oppositely facing the surface on which the current-collecting layer 13 of the active material layer 14 is disposed. By virtue of the protective layer 29 disposed on the interface 37 of the active material layer 14, dendritic growth from the negative electrode layer 16 of the power storage device can be suppressed.

(c) of FIG. 6 is a cross-section of an electrode 38 of the sixth embodiment. The electrode 38 includes the negative electrode layer 16 and the protective layer 29 in contact with the active material layer 18 of the negative electrode layer 16. In the electrode 38, the protective layer 29 is disposed on an interface 39 oppositely facing the surface on which the current-collecting layer 17 of the active material layer 18 is disposed. By virtue of the protective layer 29 disposed on the interface 39 of the active material layer 18, dendritic growth from the negative electrode layer 16 of the power storage device can be suppressed.

The insulator 33 is disposed in a power storage device to replace the separator 25 of the power storage device 24 of the second embodiment or the power storage device 26 of the third embodiment. In the insulator 33, one of the two protective layers 29 disposed on the interfaces 34 and 35 of the separator 25 may be omitted.

The electrode 36 is disposed in a power storage device to replace the positive electrode layers 12 and 27 of the power storage device 24 of the second embodiment or the power storage device 26 of the third embodiment. The electrode 38 is disposed in a power storage device to replace the negative electrode layers 16 and 30 of the power storage device 24 of the second embodiment or the power storage device 26 of the third embodiment.

### EXAMPLES

The present invention will next be described by way of example, which should not be construed as limiting the invention thereto.

### (Preparation of inorganic particles)

Li2_{C}O3_{,} MgO, La(OH)₃, SrCO₃, and ZrO₂ were weighed in specific amounts so as to form Li_{6.95}Mg_{0.15}La_{2.75}Sr_{0.25}Zr_{2.0}O₁₂. In consideration of volatilization of Li during firing, the amount of Li₂CO₃ was adjusted to be an excessive amount. The thus-weighed raw materials and ethanol were put into a nylon-made pot with zirconia balls, and the mixture was subjected to pulverization with the ball mill for 15 hours. The resultant slurry was removed from the pot and dried, and then fired on an MgO plate at 1,100°C for 15 hours. After firing, the powder was further pulverized and put into a sheath made of MgO. Further firing was conducted at 1,100°C for 4 hours. After the additional firing operation, the powder was further pulverized in a glove box under argon, to thereby yield inorganic particles (hereinafter referred to as "LLZ"). The median diameter in the volume-basis particle size distribution of LLZ, as determined through a laser diffraction/scattering method, was found to be 0.9 µm.

### (Preparation of mixtures of Examples)

A first compound (sulfolane) and lithium bis(fluorosulfonylimide)imide (LiFSI) were mixed at a mole ratio of 3:1, to thereby prepare a first electrolytic solution. A second compound (3-methylsulfolane or propylene carbonate) and LiFSI were mixed at a mole ratio of 3:1, to thereby prepare a second electrolytic solution. The first electrolytic solution and the second electrolytic solution were mixed in an argon atmosphere so that the mole fraction of the second compound was adjusted to fall within a range of 0.21 to 0.49, to thereby prepare various electrolytic solutions. Subsequently, LLZ and each electrolytic solution were mixed so that the ratio (by volume) of LLZ : electrolytic solution was adjusted to 55:45 or 61:39, to thereby yield mixtures of Examples 1 to 5.

### (Preparation of mixtures of Comparative Examples)

The first electrolytic solution and the second electrolytic solution were mixed in an argon atmosphere so that the mole fraction of the second compound was adjusted to be 0.20 or higher or 0.50 or lower, to thereby prepare various electrolytic solutions. Separately, a non-mixture-type electrolytic solution of the first electrolytic solution or the second electrolytic solution was also prepared. LLZ and each of the electrolytic solutions were mixed so that the ratio (by volume) of LLZ : electrolytic solution was adjusted to 55:45 or 61:39, to thereby yield mixtures of Comparative Examples 1 to 8. Mixtures of Comparative Examples 9 to 13 each containing no LLZ were also prepared by mixing the first electrolytic solution and the second electrolytic solution at various ratios.

### (Overall ion conductivity of bulk component of mixture)

Each of the mixtures of Examples 1 to 5 and Comparative Examples 1 to 8 was put into a cylindrical insulating member (inner diameter: 10 mm) and monoaxially pressed, to thereby form a compact (thickness: 0.5 mm). The pressure of molding was adjusted to 3 MPa in the case of a mixture having a ratio (by volume) LLZ : electrolytic solution of 55:45 and 6 MPa in the case of a mixture having a ratio (by volume) LLZ : electrolytic solution of 61:39.

The overall ion conductivity of the bulk component of the compact was determined through AC impedance measurement based on the ion blocking method. AC impedance was measured at 25°C, a voltage of 10 mV, and a frequency of 7 MHz to 10 mHz. In a Nyquist plot, an intercept (which may also be fitted by means of an equivalent circuit) in the vicinity of the real axis present in a region corresponding to 1 GHz or higher was employed as the overall ion conductivity of the bulk component. The overall ion conductivity of the bulk component corresponds to the sum of ion conductivity of LLZ (lithium ion conductivity) and overall ion conductivity of the interface present in LLZ.

Since the mixtures (electrolytic solutions) of Comparative Examples 9 to 13 contained no LLZ, a compact was failed to be formed. Thus, the ion conductivity of the corresponding electrolytic solution was measured at 25°C through the AC impedance method by means of a bipolar cell for solution measurement.

### (Differential scanning calorimetry (DSC) of mixture)

Each mixture (about 10 mg) was charged into an aluminum container and heated to 60°C at a temperature elevation rate of 10°C/minute. After achievement of 60°C, the mixture was cooled to -120°C at a temperature lowering rate of 10°C/minute. After achievement of - 120°C, the mixture was heated to 60°C at a temperature elevation rate of 10°C/minute. Thus, a DSC curve was drawn. A temperature at which the base line of a DSC curve (heating from - 120°C to 60°C) was shifted by 0.1 W/g or more (i.e., glass transition temperature T_{g}), and a peak top temperature Tₑ of an endothermic peak at temperature elevation were determined. "g" represents a total mass of the first compound and the second compound.

**[Table 1]**

| | First compound | Second compound | Mole fraction | Solid/liquid ratio (vol) | T_{g} (°C) | Tₑ (°C) | Ion cond. (mS/cm) |
|---|---|---|---|---|---|---|---|
| Ex. 1 | Sulfolane | 3-Methyl sulfolane | 0.31 | 55:45 | - | -28 | 0.90 |
| Ex. 2 | | | 0.30 | 61:39 | - | -28 | 0.76 |
| Ex. 3 | | | 0.35 | | - | -33 | 0.69 |
| Ex. 4 | | | 0.41 | | - | -35 | 0.70 |
| Ex. 5 | | Propylene carbonate | 0.30 | | -85 | -31 | 0.87 |
| Comp. 1 | | | 0.50 | | -81 | - | 0.71 |
| Comp. 2 | - | | 1.00 | | -81 | - | 0.64 |
| Comp. 3 | Sulfolane | 3-Methyl sulfolane | 0.20 | | - | -21 | 0.62 |
| Comp. 4 | | | 0.51 | | -81 | -39 | 0.58 |
| Comp. 5 | | | 1.00 | | -75 | - | 0.56 |
| Comp. 6 | | | 1.00 | 55:45 | -78 | 11 | 0.66 |
| Comp. 7 | Sulfolane | - | 0.00 | 61:39 | - | -7 | 0.62 |
| Comp. 8 | | | 0.00 | 55:45 | - | -8 | 0.83 |
| Comp. 9 | | | 0.00 | 0:100 | - | -6 | 1.78 |
| Comp. 10 | | 3-Methyl sulfolane | 0.25 | | NM | NM | 1.54 |
| Comp. 11 | - | | 1.00 | | -78 | - | 1.14 |
| Comp. 12 | Sulfolane | Propylene carbonate | 0.30 | | -83 | - | 1.81 |
| Comp. 13 | - | | 1.00 | | -79 | - | 1.73 |

| | | | | | | | |
|---|---|---|---|---|---|---|---|
| NM: not measured | | | | | | | |

Table 1 collectively shows the first compound, the second compound, mole fraction of the second compound, solid/liquid mixing ratio (LLZ : electrolytic solution), glass transition temperature T_{g}, peak top temperature of endothermic peak Tₑ, and overall ion conductivity of bulk component (ion conductivity of solution in Comparative Examples 9 to 13) of the mixtures of Examples 1 to 5 and Comparative Examples 1 to 13. The mole fraction of the second compound corresponds to a mole fraction of the amount of the second compound with respect to the total amount of the first compound and the second compound. The case where no glass transition temperature was present within a range of 25°C to -100°C is denoted by "-" in the column of T_{g} of the table, and the case where no peak top temperature of an endothermic peak was present within a range of -20°C to -100°C is denoted by "-" in the column of Tₑ of the table.

As shown in Table 1, the mixtures of Comparative Examples 9 to 13 contained no LLZ (i.e., electrolytic solutions). The mixture of Comparative Examples 9 to 11 were a mixture containing sulfolane (first compound) and 3-methylsulfolane (second compound). As the sulfolane content decreased, ion conductivity decreased. The mixtures of Comparative Examples 12 and 13 contained sulfolane (first compound) and propylene carbonate (second compound). Regardless of the sulfolane content, ion conductivity was found to be substantially constant.

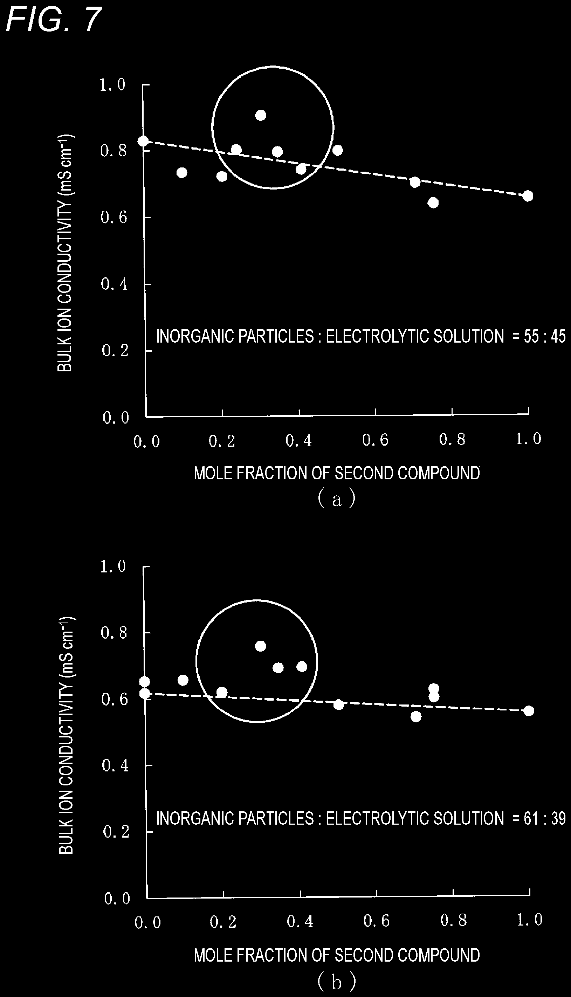

(a) of FIG. 7 is a graph showing the correlation between the mole fraction of a second compound in a mixture having an LLZ : electrolytic solution ratio of 55:45 (by volume) with bulk ion conductivity, in which the first compound was sulfolane, and the second compound was 3-methylsulfolane. (b) of FIG. 7 is a graph showing the correlation between the mole fraction of a second compound in a mixture having an LLZ : electrolytic solution ratio of 61:39 (by volume) with bulk ion conductivity, in which the first compound was sulfolane, and the second compound was 3-methylsulfolane.

As shown in (a) of FIG. 7, the ion conductivity of the bulk component of each mixture of an electrolytic solution and LLZ was found to exceed the broken line connecting an ion conductivity at a mole fraction of 0 and that at a mole fraction of 1, when the mole fraction of the second compound was higher than 0.24 and lower than 0.40. In (b) of FIG. 7, the ion conductivity of the bulk component of each mixture of an electrolytic solution and LLZ was found to significantly exceed the broken line connecting an ion conductivity at a mole fraction of 0 and that at a mole fraction of 1, when the mole fraction of the second compound was higher than 0.20 and lower than 0.50. The phenomenon was not observed in relation to the mixtures containing no LLZ (Comparative Examples 9 to 13). Since certain specificity was observed in the ion conductivity of the bulk component when the mole fraction of the second compound was 0.20 or higher and lower than 0.50, a phenomenon was conceivably evoked at the interface present in LLZ.

In Table 1, when Examples 2 to 4 and Comparative Examples 3 to 5,and 7, employing the same first compound and second compound and having the same solid/liquid volume ratio, were compared (note that Comparative Example 5 employed no first compound, and Comparative Example 7 employed no second compound), the ion conductivity was found to be higher in Examples 2 to 4 than in Comparative Examples 3 to 5, and 7. Also, when Example 1 and Comparative Examples 6 and 8, employing the same first compound and second compound and having the same solid/liquid volume ratio, were compared (note that Comparative Example 6 employed no first compound, and Comparative Example 8 employed no second compound), the ion conductivity was found to be higher in Example 1 than in Comparative Examples 6 and 8. Further, when Example 5 and Comparative Examples 1 and 2, employing the same first compound and second compound and having the same solid/liquid volume ratio, were compared (note that Comparative Example 2 employed no first compound), the ion conductivity was found to be higher in Example 5 than in Comparative Examples 1 and 2.

According to the Examples, in the mixture of an electrolytic solution containing the first compound and the second compound with LLZ (inorganic particles ) in which the mole fraction of the amount of the second compound with respect to the total amount of the first compound and the second compound was higher than 0.2 and lower than 0.5, the first compound having a symmetric molecular structure and the second compound having an asymmetric molecular structure were mixed at an appropriate ratio. Thus, conceivably, the order structure of the interface between the inorganic particles has decreased to an appropriate extent. Conceivably, the interface between the inorganic particles was in a high motility state of molecules, whereby high ion conductivity of the bulk component was achieved.

In Examples 1 to 4, no glass transition temperature was identified in the DSC curve within a range of 25°C to -100°C. In Examples 1 to 5, a peak top temperature of an endothermic peak in a DSC curve was identified within a range of -20°C to -100°C. The structure of the mixture of determined by a DSC curve in Examples 1 to 5 conceivably attributed to high ion conductivity at 25°C.

The present invention has been described in detail by way of the embodiments. However, the present invention is not limited to the above embodiments. It can be easily inferred that those skilled in the art can easily conceive various improvements and modifications, so long as they fall within the scope of the present invention.

In the above-described embodiment, the power storage device 11 have the positive electrode layer 12 in which the active material layer 14 is provided on one surface of the current-collecting layer 13, and the negative electrode layer 16 in which the active material layer 18 is provided on one surface of the current-collecting layer 17. However, the present invention is not necessarily limited thereto. It should be apparent for those skilled in the art that the elements of the above embodiment can be applied to, for example, a power storage device in which an electrode layer having the current-collecting layer 13 provided with the active material layer 14 and the active material layer 18 on each surface (i.e., a so-called bipolar electrode). By alternatingly stacking the bipolar electrode and the separator 15, and inserting the stacked product into a case (not illustrated), a so-called bipolar structure power storage device can be obtained.

The above-described embodiment corresponds to the case in which all the active material layers 14 and 18 and the separator 15 contain the mixture 10. However, the present invention is not necessarily limited thereto. Needless to say, in the power storage device, at least one of the active material layers 14 and 18 and the separator 15 essentially contains the mixture 10.

In the above embodiment, the power storage devices 11, 24, and 26 formed of a lithium ion battery have been described. However, the present invention is not necessarily limited thereto. Clearly, another power storage device may contain the mixture 10. Examples of such a power storage device include an electrochemical capacitor. Examples of such an electrochemical capacitor include a redox capacitor employing redox reaction, and a hybrid capacitor which is an asymmetric cell including an electric double layer capacitor in combination with the mixture 10.

Although a specific description has been omitted in the embodiment, those skilled in the art should naturally dispose the protective layer 29 between the active material layer 18 and the separator 15 or 25, or between the current-collecting layer 17 and the active material layer 18. When the protective layer 29 is disposed between the active material layer 18 and the separator 15 or 25, short circuit possibly caused by dendrite can be suppressed. When the protective layer 29 is disposed between the current-collecting layer 17 and the active material layer 18, deterioration of the current-collecting layer 17 can be suppressed.

### REFERENCE SIGNS LIST

10 mixture
11, 24, 26 power storage device
12 positive electrode layer (sheet, electrode)
16 negative electrode layer (sheet, electrode)
15 separator (sheet)
19 inorganic particle
22 electrolytic solution
25 separator
29 protective layer

## Claims

1. A mixture comprising inorganic particles and an electrolytic solution, wherein
the electrolytic solution contains
a first compound represented by chemical formula (1): 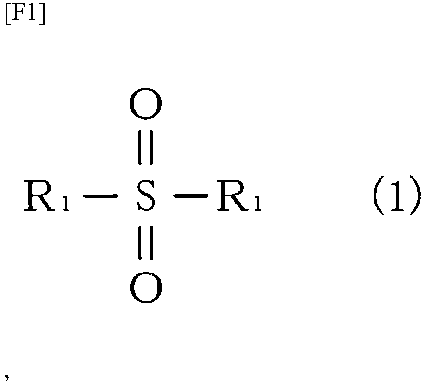
a second compound represented by chemical formula (2) or (3): 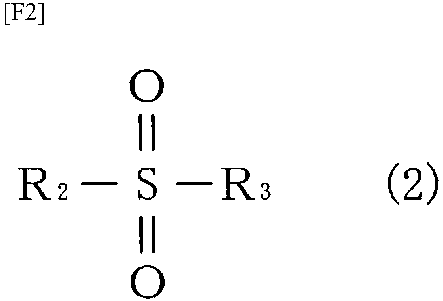 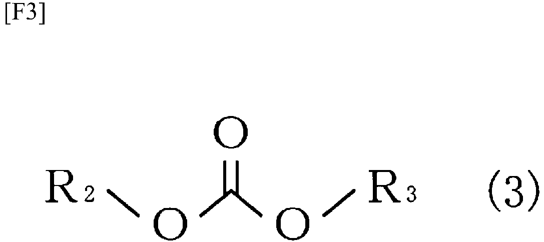 , and
an electrolyte salt dissolved in the first and second compounds, wherein
in the chemical formulas (1), (2), and (3), R₂ and R₃ are different from each other, and each of R₁, R₂, and R₃ independently represents a C≤4 alkyl group, alkoxyl group, alkenyl group, alkynyl group, or halogenated alkyl group, or the alkyl group, alkoxyl group, alkenyl group, alkynyl group, or halogenated alkyl group are bound together to form a ring structure; and
a mole fraction of the amount of the second compound with respect to the total amount of the first compound and the second compound is more than 0.2 and less than 0.5.

2. The mixture according to claim 1, wherein
the first compound is sulfolane.

3. The mixture according to claim 2, wherein
the second compound is 3-methylsulfolane or propylene carbonate.

4. The mixture according to claim 1, wherein
the electrolyte salt is a lithium salt.

5. The mixture according to claim 1, wherein
the inorganic particles serve as an oxide-based solid electrolyte.

6. The mixture according to claim 1,
which has no glass transition temperature within a temperature range of 25°C to - 100°C, as observed through differential scanning calorimetry.

7. The mixture according to claim 1,
which has a peak top temperature attributed to an endothermic peak as observed within a temperature elevation range from -100°C to -20°C in differential scanning calorimetry.

8. A sheet comprising a mixture as recited in any of claims 1 to 7.

9. An electrode comprising a mixture as recited in any of claims 1 to 7.

10. A separator comprising a mixture as recited in any of claims 1 to 7.

11. An electrode, which is in contact with a protective layer containing a mixture as recited in any of claims 1 to 7.

12. A separator, which is in contact with a protective layer containing a mixture as recited in any of claims 1 to 7.

13. A power storage device having an electrode as recited in claim 9.

14. A power storage device having a separator as recited in claim 10.

15. A power storage device having an electrode as recited in claim 11.

16. A power storage device having a separator as recited in claim 12.
